# EUROPÄISCHE PATENTSCHRIFT

(11) **EP 3 622 196 B1**
(45) Veröffentlichungstag und Bekanntmachung des Hinweises auf die Patenterteilung: **06.07.2022**
(21) Anmeldenummer: 18720089.4
(22) Anmeldetag: 11.04.2018
(51) Int. Cl.: F16F 15/14

(54) **FLIEHKRAFTPENDELEINRICHTUNG MIT EINEM VORSPANNELEMENT ZUR FÜHRUNG DER ZYLINDERROLLEN**
CENTRIFUGAL PENDULUM DEVICE HAVING A PRE-STRESSING ELEMENT FOR GUIDING THE CYLINDRICAL ROLLERS
DISPOSITIF DE PENDULE À FORCE CENTRIFUGE COMPRENANT UN ÉLÉMENT DE PRÉCONTRAINTE POUR LE GUIDAGE DES GALETS CYLINDRIQUES

(30) Priorität: 10.05.2017 DE 102017110022
(43) Veröffentlichungstag der Anmeldung: 18.03.2020
(73) Patentinhaber: Schaeffler Technologies AG & Co. KG, 91074 Herzogenaurach (DE)
(72) Erfinder: ECKERLE, Simon, 77815 Bühl (DE)
(86) Internationale Anmeldenummer: PCT/DE2018/100327
(87) Internationale Veröffentlichungsnummer: WO 2018/206036

(56) Entgegenhaltungen:
- WO-A1-2014/005907
- WO-A1-2015/140456
- DE-A1-102013 220 287
- DE-A1-102014 225 662

## Beschreibung

Die Erfindung betrifft eine Fliehkraftpendeleinrichtung einer Drehmomentübertragungsvorrichtung von einem Antriebsstrang eines brennkraftmaschinengetriebenen Fahrzeugs gemäß dem Oberbegriff von Anspruch 1.

Fliehkraftpendeleinrichtungen werden zur Schwingungsdämpfung, insbesondere zur Isolation von Drehschwingungen, in Antriebssträngen von Kraftfahrzeugen eingesetzt, die mittels einer Brennkraftmaschine angetrieben werden. Dabei wird die Schwingungsenergie bzw. die Schwingungsamplitude gedämpft oder getilgt, indem Pendelmassen der Fliehkraftpendeleinrichtung gegenläufig zu den zu tilgenden Schwingungen schwingen.

Die DE 10 2011 087 631 A1 offenbart eine Fliehkraftpendeleinrichtung, bei der einem Träger- oder Pendelflansch über den Umfang verteilte Pendelmassen zugeordnet sind, die in einer Drehebene pendelnd an dem Trägerflansch aufgehängt sind. Die Aufhängung und Verstellung der Pendelmassen gegenüber dem Pendelflansch erfolgt mittels Rollen oder Wälzkörpern, die in zueinander gegenläufig gekrümmten Laufbahnen von dem Trägerflansch und den Pendelmassen geführt sind.

Aus der DE 10 2009 042 836 A1 ist ein Fliehkraftpendel in einer Drehmomentübertragungseinrichtung bekannt. An einem Pendelflansch sind beidseitig über den Umfang verteilt Pendelmassen begrenzt verschwenkbar angeordnet. Hierzu sind die Pendelmassen mit an Ausschnitten angeordneten Laufbahnen und der Pendelflansch mit komplementären Ausschnitten mit Laufbahnen versehen. Hierbei werden zwei an beiden Pendelflanschseiten gegenüberliegend angeordnete Pendelmassen mittels Verbindungselementen wie Verbindungsbolzen, die die Ausschnitte des Pendelflansches durchgreifen, verbunden und jeweils ein Wälzkörper in die zueinander komplementären Ausschnitte der Pendelmassen und des Pendelflansches mit den entsprechenden Laufbahnen eingelegt.

Aus den Dokumenten DE 10 2013 220 287 A1 und WO 2015/140456 A1 ist jeweils eine Fliehkraftpendeleinrichtung mit den Merkmalen des Oberbegriffs des Anspruchs 1 bekannt.

Die Aufgabe der vorliegenden Erfindung besteht darin, eine funktional verbesserte Fliehkraftpendeleinrichtung mit einer reduzierten Geräuschemission bereitzustellen, die kostengünstig realisierbar ist.

Dieses Problem wird durch eine Fliehkraftpendeleinrichtung nach Anspruch 1 gelöst.

Vorteilhafte Ausführungsformen sind in den abhängigen Ansprüchen angegeben.

Die Lösung der Aufgabenstellung erfolgt mit einer Fliehkraftpendeleinrichtung mit den Merkmalen des Anspruchs 1, bei der die Rollenbahnen für die Zylinderrollen im Trägerflansch in Richtung der Drehachse offen und alle Zylinderrollen von der Kraft eines einteiligen oder mehrteiligen Vorspannelementes radial in Richtung einer Außenkontur der Rollenbahnen beaufschlagt sind.

Vorteilhaft unterbindet bzw. verringert das auch als Federring zu benennende Vorspannelement ein für eine nachteilige Geräuschentwicklung verantwortliches Spiel zwischen den Zylinderrollen und den Rollbahnen, indem die Zylinderrollen durch eine möglichst konstant wirkende Radialkraft des Vorspannelementes gegen die Außenkonturen der Rollenbahnen im Trägerflansch gedrückt werden.

Mit Hilfe der erfindungsgemäßen Gestaltung des Trägerflansches, der innenseitig offene Rollenbahnen einschließt, wird in Richtung der Drehachse der Fliehkraftpendeleinrichtung ein vergrößerter bzw. zusätzlicher Bauraum zur Aufnahme des Vorspannelementes geschaffen.

Aufgrund der ausgelenkten Zylinderrollen, der stetigen Anlage der Zylinderrollen an der jeweiligen Rollenbahn, stellt sich eine zusätzliche Deformation des Vorspannelementes ein. Die hieraus resultierende Federkraft wirkt der Rollenauslenkung entgegen und kann so zu einer Reduktion der Anschlaggeräusche führen. Die zusätzliche Federkapazität des Vorspannelementes bewirkt weiterhin eine gesteigerte Energieaufnahme der Fliehkraftpendeleinrichtung.

Insbesondere stellt sich durch die Erfindung eine verringerte Geräuschentwicklung bei einem niedrigen Drehzahlniveau, insbesondere in der Start- sowie der Stoppphase der Brennkraftmaschine ein. Während dieser Betriebszustände neigen bisherige bifilare Fliehkraftpendeleinrichtungen zu einer unerwünschten Geräuschemission aufgrund von Klappergeräuschen. Diese entstehen bei über Zylinderrollen geführten Pendelmassen durch das Herabfallen bzw. Verschieben der Pendelmassen und oder der Rollen in Richtung der Drehachse der Fliehkraftpendeleinrichtung bzw. durch das Anschlagen der Zylinderrollen an die Rollenbahnenden.

Die erfindungsgemäß innenseitig offen gestalteten Rollenbahnen führen zu einer vorteilhaften reduzierten Trägerflanschmasse. Außerdem vereinfacht die Rollenbahngeometrie die Herstellung des Trägerflansches sowie die Koppelung bzw. die Montage der Zylinderrollen.

Vorteilhaft stellt sich durch die Erfindung eine wirksame Bewegungskopplung der Pendelmassen ein, da bei Auslenkungsbewegungen der Pendelmassen, beispielsweise auch die nicht rutschenden Zylinderrollen durch das einteilige oder mehrteilig aufgebaute Vorspannelement miteinander gekoppelt sind.

Die Auslenkung eines einzelnen Pendels bewirkt eine Drehbewegung seiner Zylinderrollen. Durch den direkten Kontakt mit den Zylinderrollen dreht sich das Vorspannelement in die entgegengesetzte Richtung, bezogen auf den Drehsinn der Zylinderrollen. Aufgrund der Drehbewegung des Vorspannelements erfolgt ein Antrieb der Zylinderrollen aller weiteren Pendelmassen, die dadurch gleichförmig zu der ersten ausgelenkten Pendelmasse ausgelenkt werden.

Dieser Effekt verringert vorteilhaft die bei herkömmlichen Fliehkraftpendeln, insbesondere in den Start-Stopp-Zuständen der Brennkraftmaschine auftretenden unterschiedlichen Pendelmassenauslenkungen, die sonst zu einer großen Unwucht sowie Vibrationen führen können. Da ungleichmäßige Pendelmassenauslenkungen auch bei anderen Drehzahlbereichen der Brennkraftmaschine nicht auszuschließen sind, führt die Kopplung der Pendelmassen über das erfindungsgemäße Vorspannelement in allen Betriebszuständen zu einer generellen Verbesserung.

Das ein Vorspannelement einschließende erfindungsgemäße Konzept verbessert vorteilhaft weiterhin die Effizienz bzw. die Funktion der Fliehkraftpendeleinrichtung und ist kostengünstig realisierbar. Der sich durch die innenseitig offenen Rollenbahnen im Trägerflansch einstellende zusätzliche Bauraum kann vorteilhaft für alternative Drehschwingungsdämpfer- oder ZMS-Konfigurationen genutzt werden.

Gemäß der Erfindung ist als Vorspannelement ein geschlossener oder geschlitzt ausgeführter, radial vorgespannter Federring eingesetzt, dessen Außenkontur unmittelbar mit den Zylinderrollen in Kontakt steht. Dabei gewährleistet eine Vorspannkraft des Vorspannelementes stets eine Anlage der Zylinderrollen an den Rollenbahnen.

Für das Vorspannelement ist eine Vorspannkraft vorgesehen, die stets eine Anlage aller Zylinderrollen an den zugehörigen Rollenbahnen sicherstellt. Die Größe der Vorspannkraft bzw. die Federrate von dem Vorspannelement wird so gewählt, dass selbst in den Start- und Stopp-Betriebszuständen der Brennkraftmaschine, bei denen sich die Pendelmassen in Richtung der Drehachse verlagern können, die Zylinderrollen nicht von der Außenkontur der Rollenbahnen abheben. Die sich dabei einstellende spielfreie Abstützung der Zylinderrollen nimmt positiven Einfluss auf die Geräuschentwicklung der Fliehkraftpendeleinrichtung.

Bevorzugt umfasst die gemäß der Erfindung aufgebaute Fliehkraftpendeleinrichtung Pendelmassen, die beidseitig vom Trägerflansch positioniert und gegenüber dem Pendelflansch bifilar pendelnd angeordnet sind. Dabei bilden jeweils zwei über Abstandselemente verbundene Pendelmassen ein Pendelmassenpaar.

Im Einbauzustand ist das Vorspannelement außenseitig ausschließlich an den Zylinderrollen abgestützt und gleichzeitig zwischen zwei axial beabstandeten Ringborden der Zylinderrollen axial geführt. Über die Ringborde sind gleichzeitig die Zylinderrollen an dem Trägerflansch geführt. Weiterhin wird mittels der beidseitig vom Trägerflansch positionierten Ringborde der Zylinderrollen ein axialer Abstand zwischen den Pendelmassen definiert. Die jeweils zwei Pendelmassen verbindenden Abstandselemente verlaufen spielbehaftet durch eine ebenfalls in Richtung der Drehachse offene Ausnehmung von dem Trägerflansch.

Das erfindungsgemäß einteilige oder mehrteilige, geschlossene oder geschlitzte Vorspannelement kann aus Kunststoff oder einem metallischen Werkstoff hergestellt werden. Als metallischer Werkstoff eignet sich beispielsweise ein Federstahl. Die Breite des Vorspannelementes entspricht vorteilhaft der Wandstärke von dem Trägerflansch.

Der gemäß der Erfindung gestaltete Trägerflansch besitzt bedingt durch die in Richtung der Drehachse der Fliehkraftpendeleinrichtung offenen Rollenbahnen eine reduzierte Bauhöhe. Im Einbauzustand ist der Trägerflansch über radial nach außen gerichtete Befestigungslaschen mit einer Umgebungskonstruktion, insbesondere unmittelbar oder mittelbar mit dem Sekundärteil des Zweimassenschwungrades verbunden.

Im Folgenden wird die Erfindung anhand von einem Ausführungsbeispiel näher beschrieben. Die Erfindung ist jedoch nicht auf das gezeigte Ausführungsbeispiel beschränkt. Es zeigt:
- Fig. 1:: in einer Perspektive eine erfindungsgemäße Fliehkraftpendeleinrichtung, bei der alle Zylinderrollen von einem Vorspannelement kraftbeaufschlagt sind;
- Fig. 2:: einen Ausschnitt der in Fig. 1 abgebildeten Fliehkraftpendeleinrichtung in einer vergrößerten Darstellung.

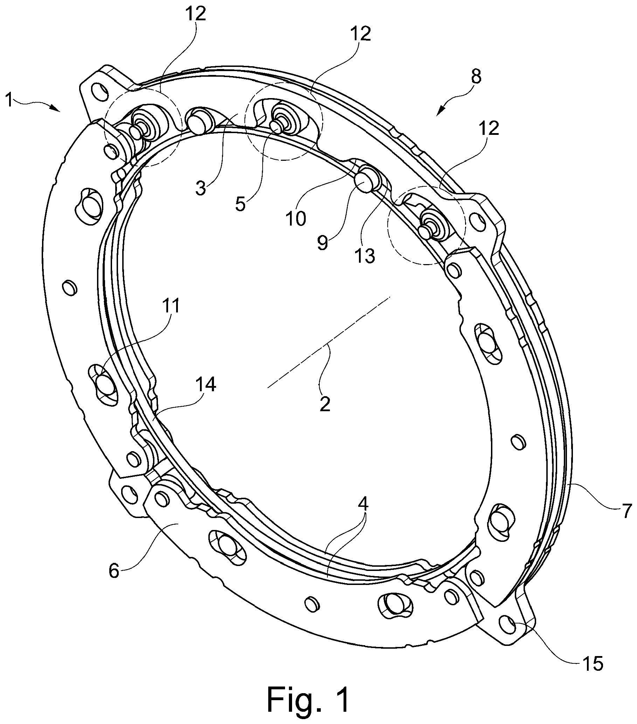

Die Fig. 1 zeigt eine erfindungsgemäß aufgebaute Fliehkraftpendeleinrichtung 1, die in einem Antriebsstrang einer bevorzugt als Zweimassenschwungrad aufgebauten Drehmomentübertragungsvorrichtung (nicht gezeigt) eines brennkraftmaschinengetriebenen Kraftfahrzeugs zugeordnet ist. Die Fliehkraftpendeleinrichtung 1 umfasst einen um eine Drehachse 2 rotierenden Trägerflansch 3, der vorzugsweise mit einem Sekundärteil des Zweimassenschwungrades in Wirkverbindung steht und der zur Aufnahme von mehreren in Umfangsrichtung hintereinander angeordneten Pendelmassenpaaren 4 bestimmt ist. Die Fliehkraftpendeleinrichtung 1 ermöglicht im Betriebszustand mittels bekannter Wirkungsweise bei einer auftretenden Drehungleichförmigkeit im Antriebsstrang eine Relativbewegung der Pendelmassenpaare 4 gegenüber dem Trägerflansch 3. Jedes Pendelmassenpaar 4 umfasst zwei axial beabstandete, durch bevorzugt als Abstandsnieten ausgeführte Abstandselemente 5 fest verbundene Pendelmassen 6, 7, die gegenüber dem Trägerflansch 3 bifilar pendelnd angeordnet sind. Eine Pendelaufhängung 8 schließt für jedes Pendelmassenpaar 4 zwei beabstandete Zylinderrollen 9 ein, die in gegenläufig zueinander verlaufenden Rollenbahnen 10, 11 des Trägerflansches 3 und der Pendelmassen 6, 7 geführt sind. Über die Pendelaufhängung 8 stellt sich bei einer im Antriebsstrang auftretenden Drehungleichförmigkeit unter Fliehkrafteinwirkung eine Schwingungen tilgende Relativbewegung der Pendelmassenpaare 4 gegenüber dem Trägerflansch 3 ein.

Zur Verdeutlichung der Pendelaufhängung 8 ist in Fig. 1 die Fliehkraftpendeleinrichtung 1 lokal ohne die vordere Pendelmasse 6 gezeigt. Dabei wird die konstruktive Gestaltung von dem Trägerflansch 3 deutlich, dessen Rollenbahnen 10 für die Zylinderrollen 9 sowie alle für die Abstandselemente 5 der Pendelmassenpaare 4 bestimmten Ausnehmungen 12 in Richtung der Drehachse 2 offen sind. Die Zylinderrollen 9 sind dabei innenseitig auf einem einteiligen Vorspannelement 14 abgestützt, das gleichzeitig alle Zylinderrollen 9 radial in Richtung einer Außenkontur 13 der Rollenbahnen 10 kraftbeaufschlagt. Über das radial vorgespannte, bevorzugt als Federring ausgeführte Vorspannelement 14 stellt sich eine spielfreie Einbaulage aller Zylinderrollen 9 ein. Im Einbauzustand ist der Trägerflansch 3 über vier umfangsseitig symmetrisch angeordnete Befestigungslaschen 15 mit einer Umgebungskonstruktion (nicht gezeigt), beispielsweise unmittelbar oder mittelbar mit einer Sekundärmasse des Zweimassenschwungrades lagefixiert verbunden.

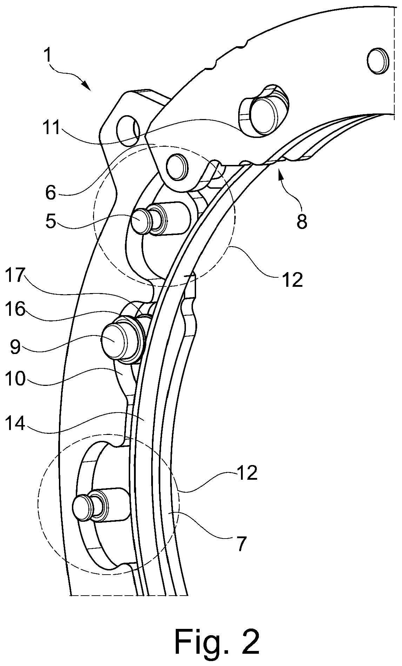

Die Fig. 2 zeigt in einer Ansicht einen Teilbereich der Fliehkraftpendeleinrichtung 1. Das federnd an den Zylinderrollen 9 abgestützte Vorspannelement 14 ist an axial beabstandeten Ringborden 16, 17 der Zylinderrollen 9 geführt, die gleichzeitig einen Abstand zwischen den Pendelmassen 6, 7 und dem Vorspannelement 14 bzw. dem Trägerflansch 3 definieren. Weiterhin sind die Ringborde 16, 17 im Bereich der Rollenbahn 10 seitlich an dem Trägerflansch 3 geführt und sichern damit die Einbaulage der Zylinderrollen 9.

### Bezugszeichenliste

- 1: Fliehkraftpendeleinrichtung
- 2: Drehachse
- 3: Trägerflansch
- 4: Pendelmassenpaar
- 5: Abstandselement
- 6: Pendelmasse
- 7: Pendelmasse
- 8: Pendelaufhängung
- 9: Zylinderrollen
- 10: Rollenbahn
- 11: Rollenbahn
- 12: Ausnehmung
- 13: Außenkontur
- 14: Vorspannelement
- 15: Befestigungslasche
- 16: Ringbord
- 17: Ringbord

## Patentansprüche

1. Fliehkraftpendeleinrichtung (1) zur Anwendung in einem Antriebsstrang eines brennkraftmaschinengetriebenen Fahrzeugs, bestehend aus zumindest einem um eine Drehachse (2) rotierenden Trägerflansch (3), dem über eine bifilare Pendelaufhängung (8) in Umfangsrichtung Pendelmassen (6, 7) zugeordnet sind, die bei einer im Antriebsstrang auftretenden Drehungleichförmigkeit unter Fliehkrafteinwirkung in Verbindung mit Zylinderrollen (9), die in gegenläufig zueinander verlaufenden Rollenbahnen (10, 11) des Trägerflansches (3) und der Pendelmassen (6, 7) geführt sind, eine Relativbewegung zu dem Trägerflansch (3) ausführen und dabei Schwingungen tilgen, wobei der Trägerflansch (3) in Richtung der Drehachse (2) offene Rollenbahnen (10) einschließt und alle Zylinderrollen (9) von einem Vorspannelement (14) radial in Richtung der Rollenbahnen (10) kraftbeaufschlagt sind, **dadurch gekennzeichnet, dass** als Vorspannelement (14) ein geschlossener oder geschlitzter, einteiliger oder mehrteiliger, radial vorgespannter Federring vorgesehen ist, der unmittelbar mit den Zylinderrollen (9) in Kontakt steht.

2. Fliehkraftpendeleinrichtung (1) nach einem der vorhergehenden Ansprüche, **dadurch gekennzeichnet, dass** eine Vorspannkraft des Vorspannelementes (14) stets eine Anlage aller Zylinderrollen (9) an zugehörige Außenkonturen (13) der Rollenbahnen (10, 11) sicherstellt.

3. Fliehkraftpendeleinrichtung (1) nach einem der vorhergehenden Ansprüche, **dadurch gekennzeichnet, dass** jeweils zwei beidseitig vom Trägerflansch (3) positionierte, über Abstandselemente (5) verbundene Pendelmassen (6, 7) ein Pendelmassenpaar (4) bilden.

4. Fliehkraftpendeleinrichtung (1) nach einem der vorhergehenden Ansprüche, **dadurch gekennzeichnet, dass** das Vorspannelement (14) außenseitig an den Zylinderrollen (9) geführt ist.

5. Fliehkraftpendeleinrichtung (1) nach Anspruch 4, **dadurch gekennzeichnet, dass** zwischen axial beabstandeten Ringborden (16, 17) der Zylinderrollen (9) das Vorspannelement (14) axial geführt ist.

6. Fliehkraftpendeleinrichtung (1) nach einem der vorhergehenden Ansprüche, **dadurch gekennzeichnet, dass** die beidseitig des Trägerflansches (3) positionierten Ringborde (16, 17) der Zylinderrollen (9) jeweils einen axialen Abstand zu den Pendelmassen (6, 7) definieren.

7. Fliehkraftpendeleinrichtung (1) nach einem der vorhergehenden Ansprüche, **dadurch gekennzeichnet, dass** die zwischen den Pendelmassen (6, 7) vorgesehenen Abstandselemente (5) durch eine in Richtung der Drehachse (2) offene Ausnehmung (12) von dem Trägerflansch (3) spielbehaftet verlaufen.

8. Fliehkraftpendeleinrichtung (1) nach einem der vorhergehenden Ansprüche, **dadurch gekennzeichnet, dass** das Vorspannelement (14) aus einem Kunststoff oder einem metallischen Werkstoff hergestellt ist.

9. Fliehkraftpendeleinrichtung (1) nach einem der vorhergehenden Ansprüche, **dadurch gekennzeichnet, dass** der Trägerflansch (3) über radial nach außen gerichtete Befestigungslaschen (15) an einer Umgebungskonstruktion lagefixiert befestigt ist.

## Claims

1. A centrifugal pendulum device (1) for application in a drive train of a vehicle powered by an internal combustion engine, consisting of at least one support flange (3) rotating about a rotational axis (2), with which pendulum masses (6, 7) are associated via a bifilar pendulum suspension (8) in the circumferential direction, which, in the event of a rotational irregularity occurring in the drive train under the influence of centrifugal force in conjunction with cylindrical rollers (9) which are guided in mutually opposing roller tracks (10, 11) of the support flange (3) and of the pendulum masses (6, 7), execute a movement relative to the support flange (3) and thereby dampen vibrations, wherein the support flange (3) encloses open roller tracks (10) in the direction of the rotational axis (2) and all cylindrical rollers (9) are subjected to a force radially in the direction of the roller tracks (10) by a pre-stressing element (14), **characterised in that** a closed or slotted, one-piece or multi-piece, radially pre-stressed spring ring is provided as the pre-stressing element (14), which is in direct contact with the cylindrical rollers (9).

2. The centrifugal pendulum device (1) according to one of the preceding claims, **characterised in that** a pre-stressing force of the pre-stressing element (14) always ensures that all the cylindrical rollers (9) are in contact with the associated outer contours (13) of the roller tracks (10, 11).

3. The centrifugal pendulum device (1) according to one of the preceding claims, **characterized in that** in each case two pendulum masses (6, 7) positioned on both sides of the support flange (3) via spacer elements (5) form a pendulum mass pair (4).

4. The centrifugal pendulum device (1) according to one of the preceding claims, **characterised in that** the pre-stressing element (14) is guided on the outside of the cylindrical rollers (9).

5. The centrifugal pendulum device (1) according to claim 4, **characterised in that** the pre-stressing element (14) is axially guided between axially spaced ring flanges (16, 17) of the cylindrical rollers (9).

6. The centrifugal pendulum device (1) according to one of the preceding claims, **characterized in that** the ring flanges (16, 17) of the cylindrical rollers (9) positioned on both sides of the support flange (3) each define an axial distance to the pendulum masses (6, 7).

7. The centrifugal pendulum device (1) according to one of the preceding claims, **characterized in that** the spacer elements (5) provided between the pendulum masses (6, 7) extend with play through a recess (12) of the support flange (3) that is open in the direction of the rotational axis (2).

8. The centrifugal pendulum device (1) according to one of the preceding claims, **characterised in that** the pre-stressing element (14) is made from a plastic or metal material.

9. The centrifugal pendulum device (1) according to one of the preceding claims, **characterized in that** the support flange (3) is fastened in a positionally fixed manner to the surrounding structure via fastening lugs (15) directed radially outwards.

## Revendications

1. Dispositif de pendule à force centrifuge (1) destiné à être utilisé dans un groupe motopropulseur d'un véhicule entraîné par moteur à combustion interne, constitué d'au moins une bride de support (3) rotative autour d'un axe de rotation (2), à laquelle sont associés, par l'intermédiaire d'une suspension pendulaire bifilaire (8) dans la direction circonférentielle, des masses pendulaires (6, 7) qui exécutent, lors d'une irrégularité de rotation se produisant dans le groupe motopropulseur sous l'influence de la force centrifuge en liaison avec des galets cylindriques (9) qui sont guidés dans des chemins de roulement (10, 11), s'étendant en sens inverse l'un par rapport à l'autre, de la bride de support (3) et des masses pendulaires (6, 7), un mouvement relatif vers la bride de support (3) et amortissent de ce fait les vibrations, la bride de support (3) englobant les chemins de roulement (10) ouverts dans la direction de l'axe de rotation (2) et tous les galets cylindriques (9) étant soumis à une force d'un élément de précontrainte (14) radialement dans la direction des chemins de roulement (10), **caractérisé en ce qu'**en guise d'élément de précontrainte (14), un anneau élastique fermé ou fendu, en une seule pièce ou en plusieurs, précontraint radialement est prévu, lequel est en contact direct avec les galets cylindriques (9).

2. Dispositif de pendule à force centrifuge (1) selon l'une quelconque des revendications précédentes, **caractérisé en ce qu'**une force de précontrainte de l'élément de précontrainte (14) assure en permanence une installation de tous les galets cylindriques (9) sur les contours externes (13) associés des chemins de roulement (10, 11).

3. Dispositif de pendule à force centrifuge (1) selon l'une quelconque des revendications précédentes, **caractérisé en ce que**, respectivement, deux masses pendulaires (6, 7) positionnées des deux côtés de la bride de support (3) et reliées par des éléments d'espacement (5), forment une paire de masses pendulaires (4).

4. Dispositif de pendule à force centrifuge (1) selon l'une quelconque des revendications précédentes, **caractérisé en ce que** l'élément de précontrainte (14) est guidé sur le côté externe des galets cylindriques (9).

5. Dispositif de pendule à force centrifuge (1) selon la revendication 4, **caractérisé en ce que** l'élément de précontrainte (14) est guidé axialement entre des bords annulaires (16, 17) espacés axialement des galets cylindriques (9).

6. Dispositif de pendule à force centrifuge (1) selon l'une quelconque des revendications précédentes, **caractérisé en ce que** les bords annulaires (16, 17) des galets cylindriques (9) positionnés des deux côtés de la bride de support (3) définissent respectivement une distance axiale jusqu'aux masses pendulaires (6, 7).

7. Dispositif de pendule à force centrifuge (1) selon l'une quelconque des revendications précédentes, **caractérisé en ce que** les éléments d'espacement (5) prévus entre les masses pendulaires (6, 7) s'étendent avec du jeu à travers une cavité (12) ouverte dans la direction de l'axe de rotation (2) depuis la bride de support (3).

8. Dispositif de pendule à force centrifuge (1) selon l'une quelconque des revendications précédentes, **caractérisé en ce que** l'élément de précontrainte (14) est fabriqué à partir d'un plastique ou d'un matériau métallique.

9. Dispositif de pendule à force centrifuge (1) selon l'une quelconque des revendications précédentes, **caractérisé en ce que** la bride de support (3) est fixée en place sur une construction adjacente par l'intermédiaire d'équerres de fixation (15) dirigées radialement vers l'extérieur.
